(19)

**Europäisches Patentamt**
**European Patent Office**
**Office européen des brevets**

(11) **EP 3 305 495 B1**

(12) **EUROPÄISCHE PATENTSCHRIFT**

(45) Veröffentlichungstag und Bekanntmachung des Hinweises auf die Patenterteilung:
**03.05.2023 Patentblatt 2023/18**

(21) Anmeldenummer: **17193638.8**

(22) Anmeldetag: **28.09.2017**

(51) Internationale Patentklassifikation (IPC):
**B29C 39/00** (2006.01) **B29C 31/04** (2006.01)
**B29C 39/02** (2006.01) **B29C 64/106** (2017.01)
**B29C 64/20** (2017.01)

(52) Gemeinsame Patentklassifikation (CPC):
**B29C 39/006; B29C 31/045; B29C 39/021; B29C 64/106; B33Y 10/00;** B29C 64/209; B29L 2031/756; B33Y 30/00

(54) **VERFAHREN ZUR ERZEUGUNG EINER DREIDIMENSIONALEN STRUKTUR IN EINER MATRIX**

METHOD FOR GENERATING A THREE-DIMENSIONAL STRUCTURE IN A MATRIX

PROCÉDÉ DE GÉNÉRATION D'UNE STRUCTURE TRIDIMENSIONNELLE DANS UNE MATRICE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.10.2016 DE 102016219192**

(43) Veröffentlichungstag der Anmeldung:
**11.04.2018 Patentblatt 2018/15**

(73) Patentinhaber: **Karlsruher Institut für Technologie**
**76131 Karlsruhe (DE)**

(72) Erfinder:
• **Rapp, Bastian**
 **76135 Karlsruhe (DE)**
• **Helmer, Dorothea**
 **76135 Karlsruhe (DE)**
• **Voigt, Achim**
 **76344 Eggenstein (DE)**

(74) Vertreter: **Altmann Stößel Dick Patentanwälte PartG mbB**
**Theodor-Heuss-Anlage 2**
**68165 Mannheim (DE)**

(56) Entgegenhaltungen:
**DE-A1- 19 606 210 US-A1- 2016 279 868**

• WILLIE WU ET AL: "Omnidirectional Printing of 3D Microvascular Networks", ADVANCED MATERIALS, Bd. 23, Nr. 24, 24. Juni 2011 (2011-06-24) , Seiten H178-H183, XP055453902, DE ISSN: 0935-9648, DOI: 10.1002/adma.201004625 -& WILLIE WU ET AL: "Omnidirectional Printing of 3D Microvascular Networks - Supporting Information", ADVANCED MATERIALS, Bd. 23, Nr. 24, 24. Juni 2011 (2011-06-24) , Seiten 1-3, XP055454009, DE ISSN: 0935-9648, DOI: 10.1002/adma.201004625
• TUNG ET AL: "Rheological behavior of poloxamer 407 aqueous solutions during sol-gel and dehydration processes", INTERNATIONAL JOURNAL OF PHARMACEUTICS, ELSEVIER, NL, vol. 107, no. 2, 4 July 1994 (1994-07-04), pages 85-90, XP025554205, ISSN: 0378-5173, DOI: 10.1016/0378-5173(94)90445-6 [retrieved on 1994-07-04]

EP 3 305 495 B1

**Beschreibung**

Gebiet der Erfindung

Die Erfindung betrifft ein Verfahren zur Erzeugung einer dreidimensionalen Struktur in einer Matrix, wobei die dreidimensionale Struktur hohle Kanalstrukturen umfasst, zur Verwendung in der Mikrostrukturtechnik und der Mikrofluidik.

Stand der Technik

Aus dem Stand der Technik sind verschiedene Verfahren und Vorrichtungen zur Erzeugung von dreidimensionalen Strukturen bekannt. Hierzu werden vorwiegend additive Fertigungstechnologien eingesetzt, bei welchen die gewünschten dreidimensionalen Strukturen sukzessiv erzeugt werden, und zu denen insbesondere Stereolithographie, 3D-Druck, Schmelzschichtverfahren oder Schmelzschichtung (engl. *Fused Deposition Molding*) und selektives Lasersintern gehören. Die "Stereolithographie" bezeichnet hierbei ein Verfahren, bei welchem gewünschte Bauteile durch selektive Belichtung einer photopolymerisierbaren Matrix sukzessiv Schicht für Schicht hergestellt werden. Unter "3D-Druck" wird ein selektives Applizieren von Tropfen einer polymerisierbaren Tinte aus einem Spot- oder Tintenstrahldrucker verstanden. In einer alternativen Ausgestaltung, die auch unter der Bezeichnung "Pulverdruck" bekannt ist, wird ein organischer Binder in ein Volumen eines polymeren Pulvers appliziert. Der Begriff des "Schmelzschichtverfahrens" bezeichnet ein Verfahren, bei welchem ein Aufschmelzen und selektives Applizieren eines Polymerfadens erfolgt. Beim "selektive Lasersintern" wird ein Volumen eines polymeren Pulvers durch selektive Laserbelichtung lokal geschmolzen und zu einem festen Bauteil verbunden.

Die bekannten Verfahren und Vorrichtungen eignen sich jedoch nur bedingt zur Erzeugung von dreidimensionalen Strukturen auf dem Gebiet der Mikrostrukturtechnik und Mikrofluidik, etwa zur Herstellung von komplexen, dreidimensionalen Netzwerken, beispielsweise von geschlossenen mikrofluidischen Kanalstrukturen. Grund dafür ist einerseits, dass die bekannten Verfahren auf ebenen Substraten besonders gut funktionieren. Beispiele sind photolithographische Verfahren, die eine ebene Projektionsfläche benötigen. Daher sind alle aus der Lithographie abgeleiteten Verfahren, wie z.B. die Stereolithographie, darauf ausgelegt, Bauteile sukzessiv in Form von Schichten aufzubauen. Nachteilig hieran ist, dass die schichtweise Erzeugung zu einer Diskretisierung der Bauteile entlang der Baurichtung führen kann. Die Stereolithographie ist daher meist nicht ausreichend auflösend, d.h. die darstellbare Auflösung reicht nicht aus, um Mikrostrukturen ausreichend fein zu erzeugen. Der 3D-Druck erreicht ebenfalls nicht die Auflösung, die für die Mikrostrukturtechnik erforderlich ist. Darüber hinaus erwiesen sich die erzeugten Strukturen, bedingt durch die Größe der applizierten Tropfen, meist als sehr rau. Auch Schmelzschichtverfahren erreichen nicht die notwendige Auflösung und die Oberflächen der gebauten Strukturen sind, bedingt durch den Durchmesser des hierfür eingesetzten Polymerfadens, ebenfalls sehr rau. Selektives Lasersintern ist apparativ sehr aufwändig, ebenfalls nur bedingt in der Lage, feine Strukturen aufzulösen und erzielt eine für die Anwendungen der Mikrostrukturtechnik nicht ausreichende Oberflächenrauigkeit.

Für die Mikrofluidik ergibt sich hieraus, dass die Kanalstrukturen im Wesentlichen in Ebenen anzuordnen und die Kanalquerschnitte grundsätzlich rechteckig herzustellen sind. Für viele Anwendungen in der Mikrofluidik wären jedoch Kanäle mit kreisförmigen Querschnitten vorteilhaft. Da diese Anforderung mit den bekannten Verfahren und Vorrichtungen zur Erzeugung von dreidimensionalen Strukturen nicht erfüllbar ist, werden mikrofluidische Strukturen in der Praxis heutzutage nahezu ausschließlich mittels Softlithographie hergestellt. Bei diesem Verfahren wird die gewünschte Struktur, z.B. eine mikrofluidische Kanalstruktur, zunächst mittels Lithographie in eine Dickschicht-Resiststruktur übertragen und in einem Lösungsmittelbad entwickelt. Die so erzeugte Resiststruktur wird in einem nächsten Schritt als Abformwerkzeug verwendet und mit einer polymerisierbaren Polymermatrix übergossen. Nach Abschluss der Polymerisation kann das so erzeugte Polymerbauteil von der Resiststruktur abgezogen werden. Das Polymerbauteil weist nun eine der Resiststruktur entsprechenden Kanalstruktur auf, die allerdings noch verschlossen werden muss, was üblicherweise als "Bonden" bezeichnet wird. Nach Abschluss des Bondens liegt nun eine funktionale mikrofluidische Kanalstruktur vor. Nachteilig an dieser klassischen Herstellungsmethode ist die strikte Limitierung auf übereinander geschichtete Lagen von zweidimensionalen Strukturen, welche den gewünschten dreidimensionalen Strukturen höchstens annähernd entsprechen. Darüber hinaus tritt auch hier das oben genannte Problem der Diskretisierung der Bauteile entlang der Baurichtung auf. Dieses Verfahren ist schließlich sehr aufwändig, da eine Vielzahl von Photomasken erforderlich ist.

Mit den bekannten Verfahren und Vorrichtungen zur Erzeugung von dreidimensionalen Strukturen lassen sich filigrane Strukturen in der Regel nicht herstellen, insbesondere da die zu erzeugenden Strukturen während des Fertigungsprozesses häufig hohen Kräften ausgesetzt sind. Diese Kräfte können insbesondere beim Rakeln auftreten oder dadurch, dass die Strukturen während des Herstellungsverfahren zu einem gegebenen Zeitpunkt frei hängend angeordnet sein können.

Ebenfalls aus dem Stand der Technik bekannt sind direktschreibende Verfahren. Wie z.B. in dem Übersichtsartikel von R.R. Jose, M.J. Rodriguez, T.A. Dixon, F. Omenetto und D.L. Kaplan, *Evolution of Bioinks and Additive Manufacturing Technologies for 3D Bioprinting,* ACS Biomater. Sci. Eng., DOI: 10.1021/acsbiomaterials.6b00088, 25.03.2016, beschrieben, wird hierzu eine erste, polymerisierbare Flüssigkeit, die auch als "Strukturfluid" bezeichnet wird, mit einem Applikator in eine Matrix, welche eine zweite Flüssigkeit oder ein Gel aufweist, appliziert. Die Matrix wird hierbei so gewählt, dass sie bei Kontakt die Polymerisation des Strukturfluids auslöst und/oder dazu eingerichtet ist, um das Strukturfluid physikalisch zu stützen, so dass das Strukturfluid an der applizierten Stelle verbleibt. Die erforderliche Polymerisation schränkt hierbei jedoch die Auswahl von Matrix und Strukturfluid stark ein, während die physikalische Unterstützung ein sehr präzises Engineering der Matrix erfordert. Ein ähnliches Verfahren mit vergleichbaren Nachteilen findet sich in WO 2015/017421 A2.

Die Applikation eines Strukturfluids in eine physikalisch unterstützende Matrix wird ebenfalls in T. Bhattacharjee, S.M. Zehnder, K.G. Rowe, S. Jain, R.M. Nixon, W.G. Sawyer und T.E. Angelini, Writing in the granular gel medium, Sci. Adv. 2015, 1:e1500655, 2015, beschrieben. Dieses Verfahren vermeidet das Absinken des applizierten Fluids, die vorgestellte Verwendung von granularen Gelen als Matrix schränkt jedoch die Auswahl an Strukturfluiden empfindlich ein, da eine hierzu erforderliche Scherverhärtung der Gele nicht bei allen Fluiden auftritt. Die Herstellung geschlossener Kanalsysteme ist mit dieser Technologie darüber hinaus nicht möglich, da dieses Verfahren das Strukturfluid appliziert. Kanäle müssen daher als Schalen geschrieben werden, was, bedingt durch die Natur der Matrix, aufwändig ist, da sich einzeln applizierte Stränge des Strukturfluids nicht zwangsläufig miteinander verbinden. Darüber hinaus erlaubt dieses Verfahren nicht Applizieren von großen Mengen an Strukturfluid, wodurch insbesondere die Herstellung von großvolumigen Bauteilen, z.B. von Blöcken, deutlich erschwert wird.

Weiterhin sind, z.B. aus US 2009/0101278 A1, additive Fertigungsverfahren bekannt, die eine direkte Applikation von Strukturfluid auf Freiflächen ohne Verwendung einer Matrix beschrieben. Diese Verfahren eignen sich aber nicht zur Herstellung filigraner Strukturen, da die unterstützende Eigenschaft der Matrix fehlt und somit nur grobe Strukturen geschrieben werden können. Anstelle von photopolymerisierbaren Strukturfluiden lassen sich auch Suspensionen und Mischungen verwenden, wie z.B. in US 2011/0250688 A1 oder S. Khalil, J. Nam und W. Sun, Multi-nozzle deposition for construction of 3D biopolymer tissue scaffolds, Emerald Rapid Prototyping Journal 11, S. 9-17, 2005, beschrieben.

Darüber hinaus sind, etwa aus US 7,399,796 B2, Änderungen an den üblichen additiven Fertigungsverfahren bekannt, bei welchen unterstützende Matrices eingesetzt werden, die mit dem Strukturfluid appliziert und später entfernt werden. Dadurch lässt sich die Herstellung filigraner Strukturen verbessern, jedoch bleibt das Auflösungsvermögen gering. Ein ähnliches Verfahren ist aus WO 2015/066705 A1 bekannt, in welcher mittels Extrusion ein Material in ein Medium abgelegt wird, um so in einem Schichtaufbau dreidimensionale Strukturen zu erzeugen. Während der Ablage in das Medium erfolgt eine Selbstvernetzung, wobei eine vernetzende Komponente direkt in eine reaktive zweite Komponente eingebracht wird.

US 2012/0058174 A1 und US 2014/0106454 A1 offenbaren Verfahren zur Herstellung von verbundenen mikrofluidischen Strukturen über ein Replikationsverfahren. Hierzu wird zunächst eine Positivstruktur des Kanalnetzwerkes hergestellt, welche anschließend mit einer polymerisierbaren Matrix umfüllt wird. Nach erfolgter Polymerisation kann die Positivstruktur aufgelöst und entfernt werden, wodurch sich ebenfalls ein verbundenes Netzwerk aus Mikrokanälen erzeugen lässt.

WO 2016/090286 A1 offenbart ein Verfahren, bei welchem im Inneren eines Materials in einem ersten Schritt mittels externer, selektiver Einbringung einer hochenergetischen Strahlung, insbesondere von Wärme, ein lokaler Phasenübergang erzeugt wird, wodurch sich rheologische Eigenschaften des Materials derart verändern, dass das das Material lokal verflüssigt wird. An den so behandelten Stellen innerhalb des Materials wird in einem nächsten Schritt das so verflüssigte Material entnommen und der hierdurch entstandene Hohlraum mit einem zweiten, ebenfalls flüssigen Material aufgefüllt, so dass ein Austausch ein ersten Fluids gegen ein zweites Fluid erfolgt. Folglich handelt es bei dem hier vorgeschlagenen Verfahren um ein Replikationsverfahren, in welchem in einem ersten Schritt über eine selektive Beaufschlagung mit hochenergetischer Strahlung eine erste Struktur erzeugt, welche in einem zweiten Schritt durch Fluidaustausch repliziert wird.

WO 2016/040095 A1 offenbart ein Verfahren und eine Vorrichtung zur Ablage eines thermoplastischen Materials in eine Stützmatrix, wobei das thermoplastische Material auf über 1150 °C aufgeheizt wird. Die sich hieraus ergebenden Anforderungen im Hinblick auf Temperatur und mechanische Festigkeit erfordern ein Graphen-Aerogel. Da hierbei das Stützmaterial bei der Durchführung der Düse durchschnitten wird, ist ein selbstheilendes Stützmaterial erforderlich, insbesondere halborganische oder silika-basierte Matrizen, die ausreichend temperaturstabil sind. Darüber hinaus wird vorgeschlagen, der Düse zusätzlich ein Schneidwerkzeug und einen Klebstoffextruder aufzumontieren, um das Durchfahren durch die Stützmatrix zu ermöglichen.

Darüber hinaus beschreiben EP 0 836 453 B1 und US 2015/0 174 826 A1 weitere Verfahren und Vorrichtungen zur Erzeugung von dreidimensionalen Strukturen.

Die Herstellung von biomimetischen mikrovaskulären 3D-Netzwerke wird beschrieben in WILLIE WU ET AL: "Omnidirectional Printing of 3D Microvascular Networks", ADVANCED MATERIALS, Bd. 23, Nr. 24, 24. Juni 2011 (2011-06-24), Seiten H178-H183, ISSN: 0935-9648, DOI: 10.1002/adma.201004625. Die Mikrokanalnetzwerke werden dabei durch omnidirektionales Drucken einer flüchtigen organischen Tinte in einer photo-vernetzbaren Hydrogelmatrix erzeugt, wobei oberhalb des Hydrogels eine flüssige Deckschicht aus einem Füllfluid angeordnet ist. In dem Druckverfahren wird das Phasenverhalten wässriger Lösungen des Triblock-Copolymers Pluronic F127 für die flüchtige Tinte, die Gelmatrix und den Füllstoff genutzt (Pluronic ist ein Warenzeichen der BASF AG). Die flüchtige Tinte besteht aus einer wässrigen Lösung Pluronic F127. Für den flüssigen Füllstoff bzw. die spätere Gelmatrix wird ein Pluronic F127 mit Diacrylat (DA) funktionalisiert, um vernetzbar zu sein. Zur Erzeugung des Hydrogels wird vor dem Druckvorgang eine wässrige Lösung mit 25 Massenprozent Pluronic F127-DA bei 4 °C in eine Silikonform gegossen und durch Erwärmen auf Raumtemperatur langsam verfestigt, wobei die Bildung von Micellen induziert wird. Die Depositionsdüse wird in das Gel eingeführt und eine Deckschicht einer wässrigen Lösung mit 20 Massenprozent Pluronic F127-DA wird als Füllfluid auf das Gel gegossen. Die flüchtige Tinte ist eine wässrige Lösung mit 23 Massenprozent Pluronic F127, die ebenfalls auf Raumtemperatur erwärmt wird und dadurch vergleichbares strukturviskoses Verhalten aufweist wie die Gelmatrix. Für den Druckvorgang wird die Depositionsdüse zum Einleiten der Tinte durch die Gelmatrix bewegt, wodurch hinter der Düse Hohlstellen entstehen, die durch Nachfließen des flüssigen Füllers aus der Deckschicht sofort gefüllt werden. Nach Beendigung des Druckvorgangs werden Hydrogel und Füllstoff chemisch photo-vernetzt, um eine mechanisch robuste Matrix zu bilden. Da das Pluronic F127 der flüchtigen Tinte nicht chemisch modifiziert ist, kann sie anschließend durch Verflüssigung bei 4 °C unter Vakuum entfernt werden, um das Mikrokanalnetzwerk innerhalb der Matrix zu erhalten.

Zu Herstellung von Mikrokanalstrukturen wird in der US 2016/279868 A1 ebenfalls eine strukturviskose Hydrogel-Matrix verwendet, die vor oder nach dem Einbringen einer entfernbaren Tinte in Form eines strukturviskosen Gels chemisch, zumindest jedoch physikalisch, vernetzt sein kann.

Die DE 196 06 210 A1 offenbart ein Verfahren, bei dem modellaufbauenden Materialien oder Fluide über ein oder mehrere mehrachsig gesteuerte Eintragswerkzeuge in oder auf eine Stützmatrix aus Gel positioniert werden, wobei das Gel später entfernt wird.

Aufgabe der Erfindung

Ausgehend hiervon, besteht die Aufgabe der vorliegenden Erfindung darin, ein Verfahren zur Erzeugung einer dreidimensionalen Struktur in einer Matrix bereitzustellen, welche die aufgeführten Nachteile und Einschränkungen des Standes der Technik zumindest teilweise überwindet. Insbesondere soll sich das Verfahren zur einfachen und möglichst präzisen Herstellung von komplexen interpenetrierenden, hohlen, offenen oder geschlossenen Mikro- und Feinstrukturen auf dem Gebiet der Mikrostrukturtechnik und der Mikrofluidik einsetzen lassen.

Offenbarung der Erfindung

Diese Aufgabe wird durch ein Verfahren zur Erzeugung einer dreidimensionalen Struktur in einer Matrix mit den Merkmalen des unabhängigen Patentanspruchs gelöst. Vorteilhafte Weiterbildungen, welche einzeln oder in beliebiger Kombination realisierbar sind, sind in den abhängigen Ansprüchen dargestellt.

Im Folgenden werden die Begriffe "haben", "aufweisen", "umfassen" oder "einschließen" oder beliebige grammatikalische Abweichungen davon in nicht-ausschließlicher Weise verwendet. Dementsprechend können sich diese Begriffe sowohl auf Situationen beziehen, in welchen, neben den durch diese Begriffe eingeführten Merkmalen, keine weiteren Merkmale vorhanden sind, oder auf Situationen, in welchen ein oder mehrere weitere Merkmale vorhanden sind. Beispielsweise kann sich der Ausdruck "A hat B", "A weist B auf", "A umfasst B" oder "A schließt B ein" sowohl auf die Situation beziehen, in welcher, abgesehen von B, kein weiteres Element in A vorhanden ist (d.h. auf eine Situation, in welcher A ausschließlich aus B besteht), als auch auf die Situation, in welcher, zusätzlich zu B, ein oder mehrere weitere Elemente in A vorhanden sind, beispielsweise Element C, Elemente C und D oder sogar weitere Elemente.

Weiterhin wird darauf hingewiesen, dass die Begriffe "mindestens ein" und "ein oder mehrere" sowie grammatikalische Abwandlungen dieser Begriffe, wenn diese in Zusammenhang mit einem oder mehreren Elementen oder Merkmalen verwendet werden und ausdrücken sollen, das das Element oder Merkmal einfach oder mehrfach vorgesehen sein kann, in der Regel lediglich einmalig verwendet werden, beispielsweise bei der erstmaligen Einführung des Merkmals oder Elementes. Bei einer nachfolgenden erneuten Erwähnung des Merkmals oder Elementes wird der entsprechende Begriff "mindestens ein" oder "ein oder mehrere" in der Regel nicht mehr verwendet, ohne dass hierdurch die Möglichkeit eingeschränkt wird, dass das Merkmal oder Element einfach oder mehrfach vorgesehen sein kann.

Weiterhin werden im Folgenden die Begriffe "vorzugsweise", "insbesondere", "beispielsweise" oder ähnliche Begriffe in Verbindung mit optionalen Merkmalen verwendet, ohne dass alternative Ausführungsformen hierdurch beschränkt werden. So sind Merkmale, welche durch diese Begriffe eingeleitet werden, optionale Merkmale, und es ist nicht beabsichtigt, durch diese Merkmale den Schutzumfang der Ansprüche und insbesondere der unabhängigen Ansprüche einzuschränken. So kann die Erfindung, wie der Fachmann erkennen wird, auch unter Verwendung anderer Ausgestaltungen durchgeführt werden. In ähnlicher Weise werden Merkmale, welche durch "in einer Ausführungsform der Erfindung" oder durch "in einem Ausführungsbeispiel der Erfindung" eingeleitet werden, als optionale Merkmale verstanden, ohne dass hierdurch alternative Ausgestaltungen oder der Schutzumfang der unabhängigen Ansprüche eingeschränkt werden soll. Weiterhin sollen durch diese einleitenden Ausdrücke sämtliche Möglichkeiten, die hierdurch eingeleiteten Merkmale mit anderen Merkmalen zu kombinieren, seien es optionale oder nicht-optionale Merkmale, unangetastet bleiben.

In einem ersten Aspekt betrifft die vorliegende Erfindung ein Verfahren zur Erzeugung einer dreidimensionalen Struktur in einer Matrix, insbesondere zur Verwendung auf dem Gebiet der Mikrostrukturtechnik und der Mikrofluidik. Der Begriff der "Erzeugung" bezeichnet hierbei eine Herstellung der gewünschten dreidimensionalen Struktur durch Anwendung des vorliegenden Verfahrens. Der Begriff der "dreidimensionalen Struktur" bezeichnet im Unterschied zu schichtweise erzeugten Bauteilen, etwa durch Anwendung eines der oben beschriebenen additiven Fertigungsverfahrens, das in der Regel zu einer Diskretisierung der Bauteile entlang der Baurichtung entsprechend den einzelnen Fertigungsschritten führt, eine beliebige räumliche Struktur, welche entsprechend der gewünschten Vorgaben erstellbar ist. Insbesondere umfassen die mit dem vorliegenden Verfahren erzeugbaren Strukturen hohle, offene oder gebundene, bevorzugt komplexe Kanalstrukturen, welche vorzugsweise über einen runden, d.h. kreisförmigen oder ovalen, Kanalquerschnitt verfügen können. Die dreidimensionalen Strukturen sind hierbei in eine Matrix eingebracht. Der Begriff der "Matrix" bezeichnet hierbei grundsätzlich einen dreidimensional ausgestalteten Körper, welcher zur Aufnahme der dreidimensionalen Strukturen eingerichtet ist. Entsprechend dem vorliegenden Verfahren wird die Matrix im Laufe des Verfahrens durch Polymerisation aus einem polymerisierbaren ersten Fluid zusammen mit den dreidimensionalen Strukturen hergestellt.

Das vorliegende Verfahren umfasst die folgenden Schritte, welche in der angegebenen Reihenfolge, beginnend mit Schritt a) und endend mit Schritt d), durchgeführt werden:

a) Bereitstellen eines ersten polymerisierbaren Fluids in einem Gefäß;
b) Einbringen eines zweiten nicht-polymerisierbaren Fluids mittels eines steuerbaren Applikationssystems an mindestens einen ausgewählten Ort innerhalb des ersten Fluids, wobei das erste Fluid und das zweite Fluid nicht miteinander mischbar sind, wodurch die dreidimensionale Struktur angelegt wird;
c) Polymerisieren des ersten Fluids, wodurch die polymere Matrix erhalten wird, in welche die dreidimensionale Struktur eingebracht ist, und
d) Zumindest teilweises Entfernen des zweiten Fluids aus der erzeugten dreidimensionalen Struktur, wobei das erste Fluid eine erste spezifische Dichte und das zweite Fluid eine zweite spezifische

Dichte aufweist, wobei sich die erste spezifische Dichte und die zweite spezifische Dichte höchstens um 20 % voneinander unterscheiden.

Gemäß Schritt a) wird zunächst ein erstes polymerisierbares Fluid, welches auch als "Strukturfluid" bezeichnet werde kann, in einem Gefäß bereitgestellt. Hierbei kann das Strukturfluid aus einer großen Anzahl an möglicher Fluide weitgehend frei gewählt werden. Insbesondere können radikalisch, anionisch oder kationisch polymerisierbare Substanzen gewählt werden, vorzugsweise, wenn sie sich mittels Lichtbestrahlung und/oder thermisch polymerisieren lassen. Darüber hinaus können langsam selbst polymerisierende Einkomponenten- oder Zweikomponenten-Polymere verwendet werden, deren Selbstpolymerisation beispielsweise in Folge einer Polyadditionsreaktion oder einer Vulkanisierung auftreten kann. In einer besonderen Ausgestaltung kann die gemäß Schritt c) stattfindende Polymerisation des ersten Fluids hierbei bereits vor oder während dem nachfolgenden Schritt b) initiiert werden. Als das Gefäß kann grundsätzlich jeder Behälter eingesetzt werden, welcher nicht mit dem ersten Fluid reagiert und der sich, insbesondere aufgrund seiner Größe und Form, zur Aufnahme eines vorgegebenen Volumens des ersten Fluids eignet.

Unter dem ersten polymerisierbaren Fluid ist dabei die Zusammensetzung zu verstehen, die nach Polymerisation, die polymere Matrix ausbildet. Die Zusammensetzung umfasst dabei mindestens eine polymerisierbare Verbindung. Als polymerisierbare Verbindungen kommen alle Verbindungen oder Gemische von Verbindungen in Frage, welche zu einer anschließenden Polymerisation geeignet sind. Hierbei kann das erste Fluid neben der mindestens einen polymerisierbaren Verbindung auch mindestens eine weitere, nicht polymerisierbare Komponente enthalten. Als nicht polymerisierbare Komponente kommen hierbei beispielsweise Siliziumdioxide, oder Nanopartikel, beispielsweise Siliziumdioxid-Nanopartikel in Frage. Das erste polymerisierbare Fluid kann dabei in Form einer Flüssigkeit, Lösung oder Dispersion vorliegen. Zusätzlich oder alternativ kann das polymeriserbare Fluid geeignete Polymerisationskatalysatoren, insbesondere ionische und radikalische Initiatoren, Platin-Komplexe ebenso wie licht- oder strahlungs-, sowie thermisch labile Verbindungen, die polymerisierbare funktionelle Gruppen freisetzen, enthalten.

Das polymerisierbare Fluid ist bevorzugt eine polymerisierbaren Zusammensetzung zur Herstellung einer Matrix, wobei die Matrix bevorzugt ein Polymer ausgewählt aus der Gruppe bestehend aus Polyurethanen, Polysiloxanen, Polyphosphazene, Polysilazane, Polyether, Poly(ethylenoxid), Polyacrylaten, Polymethacrylaten, Polysulfonen, Polyethyleniminen, thiolhaltigen Polymeren, Polymeren hergestellt aus Thiolenen, Epoxidharzen und Gemischen aus zwei oder mehreren davon, umfasst. Weiter bevorzugt umfasst die Matrix ein Polymer ausgewählt aus der Gruppe bestehend aus Epoxidharzen, Polysiloxanen, Polymethacrylaten, thiolhaltigen Polymeren oder Polymeren hergestellt aus Thiolenen.

Die Matrix kann dabei weitere Komponenten, wie beispielsweise Siliziumdioxide oder Siliziumdioxid-Nanopartikel enthalten. Umfasst das polymerisierbare Fluid weitere nicht polymerisierbare Komponenten, so umfasst die Matrix ebenfalls diese Komponente, d.h. nicht polymerisierte Komponenten, wie beispielsweise bevorzugt Siliziumdioxid, oder Nanopartikel, insbesondere Siliziumdioxid-Nanopartikel. Enthält die Matrix derartige Komponenten, so enthält die Matrix diese bevorzugt in einer Menge im Bereich von 1 bis 40 Vol.%, weiter bevorzugt im Bereich von 20 bis 35 Vol.%, insbesondere im Bereich von 25 bis 30 Vol.%, bezogen auf das Gesamtvolumen der Matrix.

Gemäß einer besonders bevorzugten Ausführungsform besteht die Matrix im Wesentlichen aus einem Polymer ausgewählt aus der Gruppe bestehend aus Polyurethanen, Polysiloxanen, Polyphosphazene, Polysilazane, Polyether, Poly(ethylelenoxid), Polyacrylaten, Polymethacrylaten, Polysulfonen, Polyethyleniminen, thiolhaltigen Polymeren, Polymere hergestellt aus Thiolenen, Epoxidharzen und Gemischen aus zwei oder mehreren davon, weiter bevorzugt besteht die Matrix im Wesentlichen aus einem Polymer ausgewählt aus der Gruppe bestehend aus Epoxidharzen, Polysiloxanen, Polymethacrylaten, thiolhaltigen Polymeren und Polymeren hergestellt aus Thiolenen. Insbesondere besteht die Matrix aus einem Polymer ausgewählt aus der Gruppe bestehend aus Polyurethanen, Polysiloxanen, Polyphosphazene, Polysilazane, Polyether, Poly(ethylelenoxid), Polyacrylaten, Polymethacrylaten, Polysulfonen, Polyethyleniminen, thiolhaltigen Polymeren, Polymeren hergestellt aus Thiolenen, Epoxidharzen und Gemischen aus zwei oder mehreren davon, weiter bevorzugt besteht die Matrix aus einem Polymer ausgewählt aus der Gruppe bestehend aus Epoxidharzen, Polysiloxanen, Polymethacrylaten, thiol-haltigen Polymeren und Polymeren hergestellt aus Thiolenen. Weiter bevorzugt umfasst, insbesondere besteht, die Matrix aus einem Polyslioxane, insbesondere Polydimethylsiloxane (PDMS).

Das polymerisierbare Fluid umfasst bevorzugt mindestens eine polymerisierbare Verbindungen ausgewählt aus Silanen, Diolen, Isocyanaten, Polyisocyanaten, Acrylaten, Methycrylaten, Epoxiden, Thiolen, Thiolenen, Ein-oder Zwei-Komponenten Silikonen, und Gemischen aus zwei oder mehreren davon. Besonders bevorzugt umfasst das polymerisierbare Fluid ein Silan, bevorzugt ein Hydroxysilan, besonders bevorzugt ein Dihydroxysilan, weiter bevorzugt ein Vinylsilan besonders bevorzugt ein Divinylsilan weiter bevorzugt ein Dihydroxydimethylsilan sowie ein Divinlysilan.

Wie oben ausgeführt kann das polymerisierbare Fluid mindestens eine nicht polymerisierbare Komponente enthalten, bevorzugt in einer Menge im Bereich von 1 bis 40 Vol.%, weiter bevorzugt im Bereich von 20 bis 35 Vol.%, insbesondere im Bereich von 25 bis 30 Vol.%, bezogen auf das Gesamtvolumen des polymerisierbaren Fluids.

Gemäß Schritt b) wird, vorzugsweise anschließend an Schritt a), ein zweites nicht-polymerisierbares Fluid, welches auch als "Inertfluid" bezeichnet werden kann, mittels eines steuerbaren Applikationssystems an mindestens einen ausgewählten Ort, vorzugsweise an eine Vielzahl von ausgewählten Orten, derart innerhalb des ersten Fluids eingebracht, dass hierdurch die dreidimensionale Struktur angelegt wird. Der Begriff des "steuerbaren Applikationssystems" bezeichnet hierbei eine Vorrichtung, welche zur Applikation des zweiten Fluids an die ausgewählten Orte in dem Volumen des ersten Fluids eingerichtet ist. Das steuerbare Applikationssystem kann vorzugsweise die in Bezug auf die Vorrichtung zur Erzeugung einer dreidimensionalen Struktur in einer Matrix aufgeführten Komponenten aufweisen. Dadurch entstehen die gewünschten dreidimensionalen Strukturen in dem sich in dem Gefäß befindlichen Volumen des ersten Fluids.

Zur Durchführung des vorliegenden Verfahrens wird das zweite Fluid derart gewählt, dass es mit dem ersten Fluid nicht mischbar ist. Auf diese Weise kann insbesondere verhindert werden, dass sich das zweite Fluid von dem ausgewählten Ort innerhalb des ersten Fluids entfernen kann. Aufgrund dieser Bedingung lassen sich eine Vielzahl an Fluiden als das zweite Fluid einsetzen. Ist das erste Fluid hydrophob, kann vorzugsweise Wasser als das zweite Fluid gewählt werden; ist das erste Fluid dagegen hydrophil, kann vorzugsweise ein Öl als das zweite Fluid gewählt werden. Insbesondere um jedoch ein möglichst einfaches, zumindest teilweises Entfernen des zweiten Fluids aus der erzeugten dreidimensionalen Struktur gemäß Schritt d) des vorliegenden Verfahrens zu ermöglichen, kann das zweite Fluid vorzugsweise derart gewählt werden, dass es über entsprechende Fließeigenschaften, insbesondere eine geringe Viskosität, verfügen kann.

Das zweite Fluid umfasst dabei insbesondere ein Fluid ausgewählt aus der Gruppe bestehend aus Wasser, Silikonöle, niederviskose Alkohole, Lösungsmittel, Tenside, Polymere, und Gemische aus zwei oder mehreren davon. Weitere Möglichkeiten sind jedoch denkbar. Der Begriff "Lösungsmittel" umfasst hier alle dem Fachmann bekannten organischen Lösungsmittel sowie Gemische aus zwei oder mehreren organischen Lösungsmitteln. Bevorzugt kommt als organisches Lösungsmittel ein Lösungsmittel ausgewählt aus der Gruppe bestehend aus DMSO, MTBE, Aceton, Ethanol, Isopropanol, Glycerol, DMF, aliphatischen und aromatischen Kohlenwasserstoffen, Cycloalkanen, aliphatischen und cyclischen Mono-, Di-, Tri- oder Tetraolen, aliphatischen und aromatischen Ethern und Gemischen aus zwei oder mehreren davon, zum Einsatz.

Der Begriff "Tensid" wie er im Rahmen der Erfindung verwendet wird, umfasst anionische, kationische, nichtionische, zwitterionische und amphiphile Tenside. Besonders geeignete Tenside sind, beispielsweise, Alpha-Tocopherolpolyethylenglykolsuccinat, Stearinsäure bzw. Salze davon, Glycerolmonostearat, ethoxyliertes Glycerolmonostearat, Sorbitanlaurat, Sorbitanmonooleat, Cetylstearylalkohol, Natriumlaurylsulfat, Docusat Natrium, Poloxamere, ethoxyliertes Ricinusöl, hydriertes ethoxyliertes Ricinusöl, Macrogolfettalkoholether, Macrogolfettsäureester, Macrogolsorbitanfettalkoholether und Macrogolsorbitanfettsäureester, Polysorbat (Tween®) 20, Polysorbat 40, Polysorbat 60, Polysorbat 80, Macrogol-15-Hydroxystearat, Macrogol-15-Hydroxyseara, Macrogol-15-Hydroxystearat, t-Octylphenoxypolyethoxyethanol (Triton™ X-100) und Gemischen aus zwei oder mehreren davon. Weitere geeignete Tenside sind Polyoxyalkylene, ein Alkylarylpolyetheralkohole, Alkylphenolether und geeignete Blockcopolymere, wie bevorzugt ein Blockcopolymer mit einer zentralen Polypropylenglykolgruppe, die von zwei Polyethyleneglykolgroppen flankiert wird, insbesondere Pluronic ® PE Blockcopolymere, zu nennen.

Als Polymere sind prinzipiell verschiedene Polymere denkbar, beispielsweise Polydimethlsiloxan, vorausgesetzt das Polymer weist geeignete Fließeigenschaften auf.

Gemäß einer bevorzugten Ausführungsform besteht das zweite Fluid, aus einem Fluid ausgewählt aus der Gruppe bestehend aus Wasser, Silikonöle, niederviskose Alkohole, Lösungsmittel, Tenside, Polymere, und Gemische aus zwei oder mehreren davon. Besonders bevorzugt umfasst das zweite, nicht-polymerisierbare Fluid ein Fluid ausgewählt aus der Gruppe bestehend aus DMSO, ein Pluronic ® PE Block-copolymer, t-Octylphenoxypolyethoxyethanol, Polysorbate 10, Polysorbat 40, Polysorbat 80 und Gemischen aus zwei oder mehreren davon.

Das erste Fluid wist eine erste spezifische Dichte $\rho_1$ und das zweite Fluid eine zweite spezifische Dichte $\rho_2$ auf. Insbesondere um sicherzustellen, dass eine gesonderte Phase des zweiten Fluids über eine längere Zeit, vorzugsweise bis zur nachfolgenden Polymerisierung des ersten Fluids, an dem ausgewählten Ort in dem Volumen des ersten, noch nicht polymerisierten Fluids verbleiben kann, etwa indem ein Absinken der gesonderten Phase des zweiten Fluids in einem Schwerkraftfeld in dem Volumen des ersten Fluids möglichst vermieden wird, können in einer besonders bevorzugten Ausgestaltung spezifischen Dichten $\rho_1$, $\rho_2$ der beiden Fluide derart aneinander angepasst werden, dass sich die Auswirkung des Schwerkraftfelds auf die beiden Fluide möglichst wenig voneinander unterscheidet. Die Anpassung der spezifischen Dichten $\rho_1$, $\rho_2$ der beiden Fluide kann hierbei vorzugsweise dadurch erfolgen, dass die beiden Fluide eine zueinander vergleichbare spezifische Dichte aufweisen. Insbesondere um in der Praxis auftretende Reibungskräfte und/oder Adhäsionseffekte zwischen den beiden Fluide mit zu berücksichtigen, genügt es, wenn sich hierzu die spezifischen Dichten $\rho_1$, $\rho_2$ der beiden Fluide nur wenig voneinander unterscheiden, erfindungsgemäß um einen Wert von höchstens 20 %, bevorzugt höchstens 15 %, besonders bevorzugt höchstens 12 %. Dadurch kann das erste Fluid als Stützmedium für das zweite Fluid dienen; bei entsprechend angepasster Dichte lassen sich dadurch sehr feine Strukturen freihängend im Volumen des ersten Fluids erzeugen.

Aus diesem Grund kann es besonders vorteilhaft sein, wenn für das zweite Fluid eine Flüssigkeit mit entsprechender spezifischer Dichte ausgewählt wird. Alternativ kann das zweite Fluid auch weitere Komponenten, beispielsweise nicht-fluide Komponenten, enthalten, die unter besonderer Berücksichtigung ihrer spezifischen Dichte derart ausgewählt werden, dass sich die resultierenden spezifischen Dichten des polymerisierbaren Fluids und des zweiten nicht-polymerisierbaren Fluids möglichst ähnlich sind. Grundsätzlich werden zu den genannten Eigenschaften jedoch keine weiteren Anforderungen an das zweite Fluid gestellt, so dass daher eine große Auswahl an Substanzen als das zweite Fluid einsetzbar ist. Als weitere Komponenten kann das zweite Fluid beispielsweise Nanopartikel, wie Siliziumdioxid-Nanopartikeln, Metallsalze, Metallinitiatoren oder Metallkatalysatoren, wie beispielsweise den Speier oder Karstedt Katalysator, enthalten. In diesem Fall könnte das zweite Fluid diejenigen Metallinitiatoren oder Metallkatalysatoren aufweisen, welche das erste Fluid polymerisieren lassen, wobei das zweite Fluid nicht an der Reaktion teilnehmen würde. Als Beispiel hierfür dient ein Karstedt Katalysator in einem Lösungsmittel.

Nachdem gemäß Schritt b) die dreidimensionale Struktur in dem Volumen des ersten Fluids angelegt wurde, wird gleichzeitig oder vorzugsweise hieran anschließend die Polymerisation des ersten Fluids gemäß Schritt c) zur gewünschten, die angelegte dreidimensionale Struktur aufweisende und fixierende Matrix ausgelöst. Dies kann durch vorzugsweise mittels Belichtung des Volumens des ersten Fluids oder mittels einer Erhöhung der Temperatur in dem Volumen des ersten Fluids geschehen. Bei einem selbstpolymerisieren ersten Fluid, beispielsweise wenn das erste Fluid ein vorgemischtes Zweikomponentensystem umfasst, kann der Abschluss der Polymerisation gemäß Schritt c) einfach abgewartet werden.

Insbesondere im Anschluss an die Polymerisation gemäß Schritt c) kann das ausgehärtete mikrofluidische Bauteil nun dem Gefäß entnommen werden. Das mikrofluidische Bauteil kann hierbei insbesondere ein dreidimensionales Netzwerk einer Kanalstruktur aufweisen, welcher der aus dem zweiten Fluid erzeugten Struktur entspricht. Da letzteres nicht polymerisiert wurde und daher noch flüssig ist, kann das zweite Fluid gemäß einem weiteren Schritt d) zumindest teilweise aus der dreidimensionalen Struktur entfernt, beispielsweise ausgewaschen, ausgeschüttelt oder durch eine Anwendung von Unterdruck (Vakuum), werden. Bei einem leicht flüchtigen zweiten Fluid kann einfach abgewartet werden, bis das zweite Fluid aus der erzeugten Struktur verdampft ist. Damit kann insbesondere ein aus der Literatur beispielsweise von Stereolithographie bekanntes Problem des Ausspülens von langen Kanalstrukturen, welches aufgrund der hohen Viskosität von Photopolymeren entsteht, vermieden werden. Während sich mit herkömmlichen Verfahren erzeugte Kanalnetzwerke oftmals nicht vollständig von Resten des Photoresists befreien lassen, kann im vorliegenden Verfahren ein dünnflüssiges zweites Fluid eingesetzt werden, wodurch hier das Entleeren von komplexen Kanalnetzwerken problemlos erfolgen kann.

Zusammengefasst verwendet das hier vorgeschlagene Verfahren einen vom Stand der Technik abweichenden Ansatz. Anstatt ein erstes Fluid als Strukturfluid direkt in eine Matrix zu applizieren, um auf diese Weise eine Positivstruktur zu erhalten, wird gemäß dem vorliegenden Verfahren das nicht-polymerisierbare zweite Fluid als das Inertfluid in das Strukturfluid appliziert. Die auf diese Weise erzeugte dreidimensionale Struktur stellt daher nicht die Positivstruktur, sondern vielmehr eine Negativstruktur dar. Da hierdurch aus dem Strukturfluid erzeugte Matrix ein wesentlich größeres Volumen als die aus dem Inertfluid erzeugte dreidimensionale Struktur einnimmt, kann sich das vorliegende Verfahren vor allem für die Erzeugung von Strukturen eignen, welche über kleinvolumige Hohlräume verfügen; die Herstellung von mikrofluidischen Kanalnetzwerken ist eine bevorzugte Ausgestaltung hierfür.

Zur Durchführung des erfindungsgemäßen Verfahrens kann bevorzugt eine elektronische Einrichtung, insbesondere ein programmierbarer Mikrochip in Form eines ASIC oder FPGA, ein Mikrocomputer, ein Computer, ein Smartphone oder ein Tablet Computer, vorgesehen sein, welche einen Programmcode, der zur Durchführung des vorliegenden Verfahrens eingerichtet ist, ausführen kann. Der Programmcode kann vorzugsweise in einer elektronischen Speichereinheit bereitgestellt werden, welche beispielsweise in die unten näher beschriebene Steuereinrichtung zur Ansteuerung des Applikationssystems eingebracht sein kann. Andere Ausgestaltungen sind jedoch möglich.

Das vorliegende Verfahren kann insbesondere mittels einer Vorrichtung zur Erzeugung einer dreidimensionalen Struktur in einer Matrix ausgeführt werden. Die Vorrichtung umfasst:

- ein Gefäß zur Bereitstellung eines ersten polymerisierbaren Fluids;
- ein Vorratsgefäß zur Bereitstellung eines zweiten nicht-polymerisierbaren Fluids;
- ein steuerbares Applikationssystem zum Einbringen des zweiten Fluids aus dem Vorratsgefäß an mindestens einen ausgewählten Ort innerhalb des ersten Fluids; und
- eine Steuereinrichtung zur Ansteuerung des Applikationssystems, wobei die Steuereinrichtung zur Festlegung des mindestens einen ausgewählten Orts innerhalb des ersten Fluids eingerichtet ist.

In einer bevorzugten Ausgestaltung kann hierzu das steuerbare Applikationssystem über einen oberhalb des Gefäßes zur Aufnahme des vorgesehenen Volumens des ersten Fluids angebrachten Aktuator oder Aktor verfügen, welcher mittels der Steuereinrichtung frei im Raum, d.h. in $x$-Richtung und/oder in $y$-Richtung und/oder in $z$-Richtung, bewegt werden kann. An dem Aktuator kann vorzugsweise eine Dosiereinrichtung, bevorzugt in Form einer feinen Applikationsnadel, derart angebracht sein, dass bei einer Bewegung des Aktuators sich die Nadel ebenfalls bewegt und so ihre Position ändern kann. Die Applikationsnadel kann insbesondere mit einem Schlauchsystem verbunden sein, durch welches das zweite Fluid mit einer einstellbaren Förderrate $Q$ des zweiten Fluids aus dem Vorratsgefäß abgeben werden kann. Der Begriff der "Förderrate" bezeichnet hierbei einen Volumenfluss des zweiten Fluids, welcher insbesondere mittels der Steuereinrichtung und einer davon gesteuerten mindestens einen Einrichtung zur Veränderung einer Förderrate des zweiten Fluids, welche beispielsweise in Form von Pumpen und/oder Durchflussreglern vorliegen kann, festgelegt werden kann. In einer besonders bevorzugten Ausgestaltung können hierzu die Bewegung des Aktuators und die Förderrate des zweiten Fluids derart aufeinander abgestimmt werden, dass eine möglichst genau definierbare Menge des zweiten Fluids an einen gewünschten Ort in dem Volumen des ersten Fluids abgegeben werden kann. Auf diese Weise lassen sich dreidimensionale Strukturen des zweiten Fluids in dem Volumen des ersten Fluids erzeugen.

Bei der Steuereinrichtung zur Ansteuerung des Applikationssystems kann es sich bevorzugt um eine elektronische Einrichtung handeln, welche für diesen Zweck eingerichtet ist, insbesondere um einen programmierbaren Mikrochip in Form eines ASIC oder FPGA, einen Mikrocomputer, einen Computer, ein Smartphone oder einen Tablet Computer. Die Steuereinrichtung kann hierbei über Verbindungen zur Kommunikation mit zu steuernden Einrichtungen, wie etwa dem Aktuator und/oder der Einrichtung zur Veränderung der Förderrate Q des zweiten Fluids, verfügen. Auch eine drahtlose Kommunikation ist möglich. Die Ansteuerung des Applikationssystems kann hierbei über einen Programmcode, welcher zur Durchführung des vorliegenden Verfahrens eingerichtet ist, erfolgen. Andere Arten der Ansteuerung des Applikationssystems sind jedoch denkbar.

Schließlich kann die Vorrichtung über eine Einrichtung zur Polymerisation des ersten Fluids verfügen, insbesondere einen Wärmestrahler und/oder eine Bestrahlungseinrichtung, vorzugsweise dann, wenn das erste Fluid nicht dazu eingerichtet ist, bereits durch die oben beschriebene Selbstpolymerisation auszuhärten.

Für weitere Einzelheiten in Bezug auf die vorliegende Vorrichtung wird auf die Beschreibung des erfindungsgemäßen Verfahrens verwiesen.

In einem weiteren Aspekt betrifft die vorliegende Erfindung ein Computerprogramm, welches dazu eingerichtet ist, um die beschriebenen Schritte des Verfahrens und, gegebenenfalls, weitere Schritte durchzuführen. Für Einzelheiten hierzu wird auf die Beschreibung des erfindungsgemäßen Verfahrens verwiesen.

Das vorliegende Verfahren und die beschriebene Vorrichtung eignen sich insbesondere zur einfachen und präzisen Herstellung von einfachen oder komplexen interpenetrierenden, hohlen, offenen oder geschlossenen Mikro- und Feinstrukturen auf dem Gebiet der Mikrostrukturtechnik und der Mikrofluidik.

Vorteile der Erfindung

Die vorliegende Erfindung weist eine Reihe von Vorteilen gegenüber den aus dem Stand der Technik bekannten Verfahren und Vorrichtungen zur Erzeugung von dreidimensionalen Strukturen auf. Das als Inertfluid eingesetzte zweite Fluid darf mit dem als Strukturfluid verwendeten ersten Fluid nicht mischbar sein und sollte vorzugsweise eine dem ersten Fluid vergleichbare spezifische Dichte aufweisen; weiteren Anforderungen an das Inertfluid werden nicht gestellt, so dass die mögliche Auswahl an Inertfluiden sehr groß ist. Darüber hinaus kann das Inertfluid eine Mischung von verschiedenen Flüssigkeiten sein, insbesondere um so eine Dichteanpassung der beiden Fluide vornehmen zu können.

Der Polymerisationsmechanismus des Strukturfluids kann frei gewählt werden; neben Selbstpolymerisation, insbesondere in Folge einer Polyadditionsreaktion oder Vulkanisierung, können thermische Polymerisation und/oder Photopolymerisation gewählt werden. Das Strukturfluid agiert als Stützmedium für das Inertfluid; bei einer hohen Dichteanpassung können sehr feine Strukturen des Inertfluids freihängend im Volumen des Strukturfluid geschrieben werden. Da hierbei das Strukturfluid im Vergleich zum Inertfluid das größere Volumen einnimmt, eignet sich die vorliegende Erfindung vor allem zur Erzeugung von Strukturen, welche kleinvolumige Hohlräume aufweisen; die Herstellung von hochauflösenden, feinstrukturierten mikrofluidischen Kanalnetzwerken ist ein bevorzugtes Beispiel hierfür. Es kann aber auch zur Herstellung von Lumenstrukturen in Bulk-Substraten eingesetzt werden und eignet sich insbesondere dort, wo feine, freiliegende Strukturen, wie z.B. Kanäle in einem Bulk-Volumen hergestellt werden sollen.

Kurze Beschreibung der Figuren

Weitere Einzelheiten und Merkmale der vorliegenden Erfindung ergeben sich aus der nachfolgenden Beschreibung von bevorzugten Ausführungsbeispielen, insbesondere in Verbindung mit den abhängigen Ansprüchen. Hierbei können die jeweiligen Merkmale für sich alleine oder zu mehreren in Kombination miteinander verwirklicht sein. Die Erfindung ist jedoch nicht auf die Ausführungsbeispiele beschränkt.

Die Ausführungsbeispiele sind schematisch in den nachfolgenden Figuren dargestellt. Hierbei bezeichnen gleiche Bezugsziffern in den Figuren gleiche oder funktionsgleiche Elemente bzw. hinsichtlich ihrer Funktionen einander entsprechende Elemente.

Im Einzelnen zeigen:

Figur 1A und 1B     eine schematische Darstellung eines bevorzugten Ausführungsbeispiels für eine Vorrichtung zur Erzeugung einer dreidimensionalen Struktur in einer Matrix (Figur 1A) und ein damit hergestelltes beispielhaftes mikrofluidisches Bauteil, welches über eine dreidimensionale Struktur in einer Matrix verfügt (Figur 1B); sowie

Figuren 2 bis 6     Aufnahmen von erfindungsgemäß hergestellten mikrofluidischen Bauteilen mit dreidimensionalen Strukturen in einer Matrix insbesondere zur Verwendung als Mikrokanäle in der Mikrofluidik.

Beschreibung der Ausführungsbeispiele

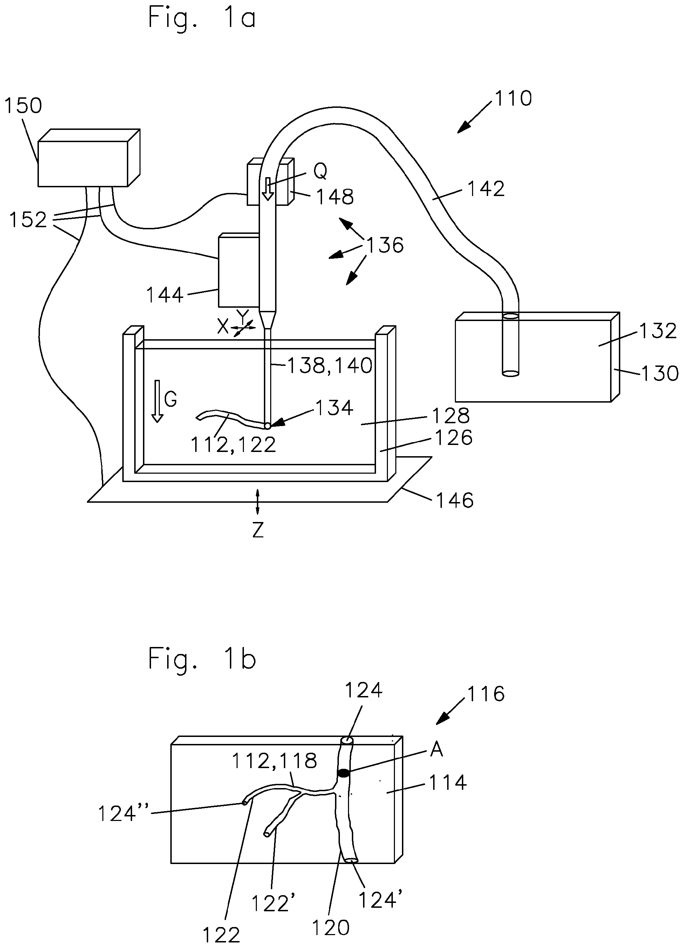

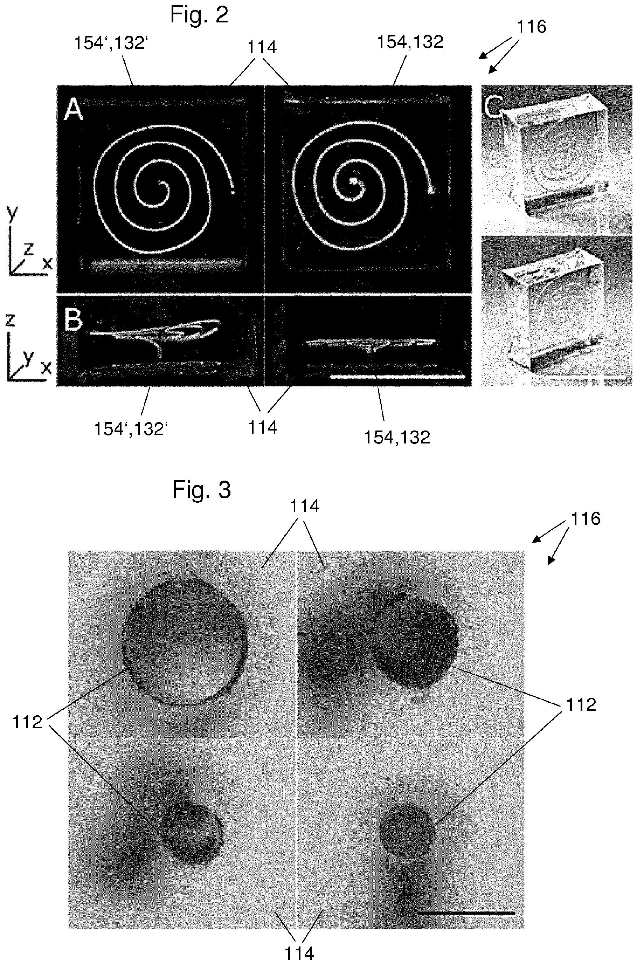

Figur 1A zeigt schematisch ein bevorzugtes Ausführungsbeispiel für eine Vorrichtung 110 zur Erzeugung einer dreidimensionalen Struktur 112 in einer Matrix 114, beispielsweise zur Erzeugung der in Figur 1B beispielhaft dargestellten dreidimensionalen Struktur 112 innerhalb der Matrix 114. Wie aus Figur 1B hervorgeht, kann es sich hierbei vorzugsweise um ein mikrofluidisches Bauteil 116 handeln, in welchem die dreidimensionale Struktur 112 in der Matrix 114 in Form eines feinstrukturierten Kanalnetzwerks 118 ausgestaltet ist, welches zum Beispiel einen Hauptkanal 120 und Seitenkanäle 122, 122' aufweisen kann. Das Kanalnetzwerk 118 kann hierbei über Öffnungen 124, 124', 124" aus dem mikrofluidischen Bauteil 116 verfügen. Eine Vielzahl an weiteren Ausgestaltungen des mikrofluidischen Bauteils 116 ist möglich, insbesondere die in den Figuren 2 bis 6 dargestellten dreidimensionalen Strukturen 112.

Die Erzeugung der dreidimensionalen Struktur 112 in der Matrix 114 erfolgt vorzugsweise mittels der in Figur 1A schematisch dargestellten Vorrichtung 110. Die Vorrichtung 110 umfasst hierzu ein Gefäß 126, welches gemäß Schritt a) des vorliegenden Verfahrens zur Bereitstellung eines ersten, polymerisierbaren Fluids 128 eingerichtet ist. Erfindungsgemäß erfolgt die Bereitstellung des ersten Fluids 128 in dem Gefäß 126. Als das erste Fluid 128 eignen sich insbesondere Meth(acrylate), Expoxide, Polyurethane, Isocyanate, Polyole, Thiole, Thiolene oder, vorzugsweise Ein- oder Zwei-Komponenten-Silikone, besonders bevorzugt Polydimethylsiloxan (PDMS), ein in der Mikrofluidik verbreitetes Material, welches insbesondere aufgrund seiner hohen optischen Transparenz, Biokompatibilität und Elastizität eingesetzt wird. PDMS kann nicht mit den eingangs beschriebenen bekannten additiven Fertigungsverfahren strukturiert werden, da es zumeist mittels Hydrosilylierung bei Raumtemperatur vernetzt und sich weder thermisch noch photoinduziert polymerisieren lässt.

Weiterhin umfasst die Vorrichtung ein Vorratsgefäß 130, welches zur Bereitstellung eines zweiten Fluids 132, das nicht-polymerisierbar ist und sich nicht mit dem ersten Fluid 128 mischen kann, eingerichtet ist. Auf diese Weise kann, wie unten näher beschrieben, eine kleine Menge des zweiten Fluids 132 in ein Volumen des ersten Fluids 128 eingebracht werden, ohne dass sich das zweite Fluid 132 mit dem ersten Fluid 128 mischen und sich darin verbreiten kann; vielmehr verbleibt das zweite Fluid 132 dadurch als gesonderte Phase in dem Volumen des ersten Fluids 128 erhalten, wodurch die dreidimensionale Struktur 112 in dem Volumen des ersten Fluids 128 angelegt wird.

Das erste Fluid 128 verfügt hierbei über eine erste spezifische Dichte $\rho_1$ und das zweite Fluid 132 über eine zweite spezifische Dichte $\rho_2$. Insbesondere um weiterhin sicherzustellen, dass die gesonderte Phase des zweiten Fluids 132 über eine längere Zeit, vorzugsweise bis zur nachfolgenden Polymerisierung des ersten Fluids 128, an einem ausgewählten Ort 134 in dem Volumen des ersten, noch nicht polymerisierten Fluids 128 verbleiben kann, etwa um ein Absinken der gesonderten Phase des zweiten Fluids 132 in einem Schwerkraftfeld in dem Volumen des ersten Fluids 128 zu vermeiden, kann es besonders vorteilhaft sein, die spezifischen Dichten $\rho_1$, $\rho_2$ der beiden Fluide 128, 132 derart aneinander anzupassen, dass sich die Auswirkung des Schwerkraftfelds auf die beiden Fluide 128, 132 möglichst wenig voneinander unterscheidet.

Unter Vernachlässigung von Reibungskräften und Adhäsionseffekten kann eine auf ein Volumenelement $\Delta V$ eines der beiden Fluide 128, 132 einwirkende Schwerkraft $G$ gemäß Gleichung (1) wie folgt ermittelt werden:

$$G = \rho \cdot \Delta V \cdot g, \qquad\qquad (1)$$

wobei $\rho$ die spezifische Dichte des betreffenden der beiden Fluide 128, 132 und g die Gravitationskonstante bezeichnen. Um möglichst denselben Wert für die auf dasselbe Volumenelement $\Delta V$ einwirkende Schwerkraft $G$, unabhängig davon, ob das Volumenelement $\Delta V$ das erste Fluid 128 oder das zweite Fluid 132 aufweist, zu erhalten, fordert Gleichung (1), dass die spezifische Dichte $\rho_1$ des ersten Fluids 128 und die zweite spezifische Dichte $\rho_2$ des zweiten Fluids möglichst denselben Wert annehmen. Da in der Praxis jedoch Reibungskräfte und/oder Adhäsionseffekte auf die beiden Fluide 128, 132 einwirken können, genügt es, wenn sich die spezifische Dichte $\rho_1$ des ersten Fluids 128 und die zweite spezifische Dichte $\rho_2$ des zweiten Fluids möglichst wenig voneinander unterscheiden, erfindungsgemäß um einen Wert von höchstens 20 %, bevorzugt höchstens 15 %, besonders bevorzugt höchstens 12 %.

Aus diesem Grund kann es besonders vorteilhaft sein, wenn für das zweite Fluid 132 eine Flüssigkeit mit entsprechender spezifischer Dichte ausgewählt wird. Alternativ kann es sich bei dem zweiten Fluid 132 auch um ein Gemisch aus mindestens zwei voneinander verschiedene Komponenten handeln, die unter besonderer Berücksichtigung ihrer spezifischen Dichte derart ausgewählt werden, dass sich die spezifischen Dichten der beiden Fluide 128, 132 möglichst ähnlich sind. Grundsätzlich werden keine weiteren Anforderungen an das zweite Fluid 132 gestellt, so dass daher eine große Auswahl an Substanzen als das zweite Fluid 132 einsetzbar ist.

Insbesondere um jedoch ein möglichst einfaches, zumindest teilweises, vorzugsweise möglichst vollständiges Entfernen des zweiten Fluids 132 aus der erzeugten dreidimensionalen Struktur 112 gemäß Schritt d) des vorliegenden Verfahrens zu ermöglichen, kann das zweite Fluid 132 derart gewählt werden, dass es über entsprechende Fließeigenschaften, insbesondere eine niedrige Viskosität, verfügen kann. Als das zweite Fluid 132 eignen sich daher insbesondere Wasser, niederviskose Alkohole oder Lösungsmittel sowie Tenside oder Tensidgemische, vorzugsweise nicht-ionische Benetzungsmittel mit geringer Schaumbildung, beispielsweise Blockcopolymere, z.B. ein Blockcopolymer mit einer zentralen Polypropylenglykolgruppe, die von zwei Polyethylenglykolgruppen flankiert wird. Alternativ kann Wasser als das zweite Fluid 132 eingesetzt werden, falls das erste Fluid 128 hydrophobe Eigenschaften aufweist, oder es kann ein Öl kann gewählt werden, falls das erste Fluid 128 über hydrophile Eigenschaften verfügt. Weitere Möglichkeiten sind denkbar.

Um, wie oben angedeutet, gemäß Schritt b) des vorliegenden Verfahrens eine kleine Menge des zweiten Fluids 132 aus dem Vorratsgefäß 130 an mindestens einen ausgewählten Ort 134 innerhalb des sich indem Gefäß 126 befindlichen ersten Fluid 128 einzubringen, verfügt die vorliegende Vorrichtung 110 weiterhin über ein steuerbares Applikationssystem 136. Hierzu verfügt das Applikationssystem 136 über eine Dosiereinrichtung 138 für das zweite Fluid 132, welche hier in Form einer dünnen Applikationsnadel 140 ausgestaltet ist, und welche dazu eingerichtet ist, um am ausgewählten Ort 134 in dem Volumen des ersten Fluids 128 eine festgelegte Menge an dem zweiten Fluid 132 applizieren zu können. Beispielsweise kann die Dosiereinrichtung 138 eine Spritzenpumpe als Förder- und Aufnahmevorrichtung umfassen, während die Applikationsnadel 140 in Form einer Luer-Spritzenaufsatznadel mit einem Innendurchmesser von 0,05 mm bis 0,5 mm, bevorzugt von 0,1 mm bis 0,25 mm, vorliegen kann. Alternativen sind jedoch ohne weiteres vorstellbar. Das zweite Fluid 132 kann hierbei insbesondere mittels eines Schlauchsystems 142 aus dem Vorratsgefäß 130 in das sich in dem Gefäß 126 befindlichen Volumen des ersten Fluids 128 gefördert werden. Das Schlauchsystem 142 kann hierzu z.B. Teflonschläuche aufweisen, insbesondere da Teflon mit sehr vielen Fluiden praktisch nicht reagieren kann. Weitere Möglichkeiten sind jedoch denkbar.

Um die festgelegte Menge an dem zweiten Fluid 132 am ausgewählten Ort 134 in dem Volumen des ersten Fluids 128 applizieren zu können und um für diesen Zweck eine Einstellung einer Position der Dosiereinrichtung 138 in Bezug auf das erste Fluid 128 zu erlauben, weist das Applikationssystem 136 weiterhin einen zu diesem Zweck eingerichteten Aktuator 144 auf. In einer besonderen Ausgestaltung kann der Aktuator 144 derart ausgestaltet sein, dass eine Veränderung der Position der Dosiereinrichtung 138 in allen drei Raumrichtungen *x, y* und *z* möglich ist. Alternativ oder zusätzlich, kann, wie in Figur 1 schematisch dargestellt ist, das Gefäß 126, in dem sich das erste Fluid 128 befindet, auf einer beweglichen Plattform 146, welche in *z*-Richtung verschiebbar ist, angeordnet sein, während der Aktuator 144 in *x*-Richtung und in *y*-Richtung verstellbar sein kann. In einer anderen Ausgestaltung kann die bewegliche Plattform 146 dagegen in *x*-Richtung und in *y*-Richtung verschiebbar sein, während der Aktuator 144 lediglich in *z*-Richtung verstellbar sein kann. In einer weiteren Ausgestaltung kann die bewegliche Plattform 146 in *x*-, *y*- und *z*-Richtung steuerbar sein, wohingegen die Dosiereinrichtung 138 ortsfest angeordnet sein kann. Weitere Ausgestaltungen sind möglich.

Darüber hinaus kann, wie in dem Ausführungsbeispiel gemäß Figur 1 vorgesehen, eine Einrichtung 148 zur Veränderung einer Förderrate *Q* des zweiten Fluids 132 vorgesehen sein. Wie unten, insbesondere aus den Figuren 3 bis 5, erkennbar, kann die Förderrate *Q* des zweiten Fluids 132 vorzugsweise dazu eingesetzt werden, um einen Kanalquerschnitt A eines Kanals in dem Kanalnetzwerk 118 einzustellen.

Weiterhin umfasst die vorliegende Vorrichtung 110 eine Steuereinrichtung 150, welche zur Ansteuerung des Applikationssystems 136 eingerichtet ist. Mittels der Steuereinrichtung 150 werden somit die ausgewählten Orte 134 innerhalb des ersten Fluids 128 festgelegt und darüber hinaus kann auch die Förderrate *Q* des zweiten Fluids 132 eingestellt werden. Weitere Möglichkeiten zur Ansteuerung, etwa einer Temperatur mindestens eines der beiden Fluide 128, 132, sind denkbar. Bei der Steuereinrichtung 150 kann es sich um eine elektronische Einrichtung handeln, welche für diesen Zweck eingerichtet ist, z.B. um einen programmierbaren Mikrochip in Form eines ASIC oder FPGA, einen Mikrocomputer, einen Computer, ein Smartphone oder einen Tablet Computer. Die Steuereinrichtung 150 kann hierbei über Verbindungen 152 mit zu steuernden Einrichtungen, etwa dem Aktuator 144, der beweglichen Plattform 146 und der Einrichtung 148 zur Veränderung der Förderrate *Q* des zweiten Fluids 132, kommunizieren. Auch eine drahtlose Kommunikation ist möglich. Die Ansteuerung des Applikationssystems 136 kann beispielsweise mittel der so genannten *G Code* Makrosprache erfolgen. Hierfür können Koordinaten und Steuerparameter aus einer CAD-Skizze abgeleitet und mittels des Makrocodes an das Applikationssystem 136 übergeben. Andere Arten der Ansteuerung des Applikationssystems 136 sind jedoch denkbar.

Um das mikrofluidische Bauteil 116 zu erhalten, erfolgt gemäß Schritt c) des vorliegenden Verfahrens eine Polymerisation des ersten Fluids 128 zu einer Matrix 114, welche die dreidimensionale Struktur 112, beispielsweise in Form eines feinstrukturierten Kanalnetzwerks 118, umfasst. Je nach Art des gewählten ersten polymerisierbaren Fluids 128 kann die Polymerisation des ersten Fluids 128 durch eine Polymerisationsreaktion erfolgt, welche insbesondere durch Wärme, Bestrahlung und/oder Selbstpolymerisation ausgelöst werden kann. Im Falle einer Selbstpolymerisationsreaktion kann es in der Regel genügen, hierzu einen Zeitraum abzuwarten, zu dem die Polymerisation des ersten Fluids 128 zumindest teilweise angeschlossen sein kann. In diesem Falle kann lediglich eine Zeitmessung z.B. durch die Steuereinrichtung 150 vorgenommen werden. Alternativ, insbesondere wenn die Polymerisationsreaktion durch Wärme und/oder Bestrahlung auslösbar ist, kann zur Polymerisation des ersten Fluids 128 eine für diesen Zweck ausgestaltete Einrichtung zur Polymerisation des ersten Fluids 128 (nicht dargestellt) eingesetzt werden. Bei dieser Einrichtung kann es sich folglich um einen Wärmestrahler oder eine Bestrahlungseinrichtung handeln. Weitere Ausgestaltungen sind jedoch möglich.

Nach erfolgter Polymerisation der Matrix 114 aus dem ersten polymerisierbaren Fluid 128 wird das zweite, nicht-polymerisierbare Fluid 132 gemäß Schritt d) des vorliegenden Verfahrens zumindest teilweise, vorzugsweise möglichst vollständig, aus der erzeugten dreidimensionalen Struktur 112 entfernt, insbesondere um auf diese Weise zu ermöglichen, dass das feinstrukturierte Kanalnetzwerk 118 in dem mikrofluidischen Bauteil 116 bestimmungsgemäß mit weiteren Flüssigkeiten gefüllt werden kann. Für das Entfernen des zweiten Fluids 132 aus der dreidimensionalen Struktur 112 kann es, insbesondere je nach Art des eingesetzten zweiten Fluids 132, verschiedene Möglichkeiten geben, z.B. ein Auswaschen des zweiten Fluids 132, ein Hin- und Herbewegen (Schütteln) des mikrofluidischen Bauteils 116, eine Entfernung unter Unterdruck (Vakuum) und/oder ein Abwarten, bis das zweite Fluid 132 weitgehend verdampft ist. Andere Möglichkeiten sind denkbar.

Die Figuren 2 bis 6 zeigen eine Reihe von Aufnahmen von erfindungsgemäß hergestellten mikrofluidischen Bauteilen 116, welche über dreidimensionale Strukturen 112 in einer Matrix 114, insbesondere zur Verwendung als Mikrokanäle in der Mikrofluidik, verfügen. Andere Arten von Anwendungen sind jedoch möglich.

Figur 2 zeigt eine Aufnahme von zwei unterschiedlichen dreidimensionalen Strukturen 154, 154', welche in optisch transparentem PDMS als Matrix 114 unter Verwendung von zwei verschiedenen zweiten Fluiden 132, 132' jeweils in Form einer Spiralstruktur hergestellt wurden. Zur Erstellung der Aufnahme wurde das hierdurch in der Matrix 114 erzeugte Kanalnetzwerk 118 nach seiner Herstellung jeweils mit fluoreszierender Farbe gefüllt und bei einer optischen Wellenlänge von 365 nm beleuchtet. Hierbei zeigen Figur 2A jeweils eine Ansicht von oben, Figur 2B jeweils eine Ansicht von der Seite und Figur 2C jeweils eine perspektivische Ansicht des mikrofluidischen Bauteils 116. Die Länge des in Figur 2B dargestellten Balkens beträgt 1.8 cm.

Die verwendeten beiden verschiedenen zweiten Fluide 132, 132' unterschieden sich hierbei in Bezug auf ihre spezifische Dichte $\rho_1$, $\rho_2$. Während in den links in Figur 2 dargestellten Ansichten der mikrofluidischen Bauteile 116 die spezifische Dichte $\rho_2$ des zweiten Fluids 132 im Wesentlichen der spezifischen Dichte $\rho_1$ des ersten Fluids 128 entsprach, wobei eine Abweichung von weniger als 5 % vorlag, übertraf in den in der Mitte in Figur 2 dargestellten Ansichten der mikrofluidischen Bauteile 116 die spezifische Dichte $\rho_2$ des hier verwendeten zweiten Fluids 132'die spezifische Dichte $\rho_1$ des ersten Fluids 128 mehr als 20 %. Wie aus Figur 2B hervorgeht, neigen die mit dem zweiten Fluid 132' mit höherer spezifische Dichte $\rho_2$ hergestellten dreidimensionalen Strukturen 154' dazu, durch die einwirkende Schwerkraft G in dem Volumen des ersten Fluids 128 abzusinken, während die mit dem zweiten Fluid 132 mit an die spezifische Dichte $\rho_1$ des ersten Fluids 128 angepasster spezifische Dichte $\rho_2$ hergestellten dreidimensionalen Strukturen 154 im Wesentlichen in ihrer horizontalen Lage verbleiben. Somit zeigt Figur 2B exemplarisch die Auswirkungen einer Anpassung der spezifischen Dichte $\rho_2$ des zweiten Fluids 132 an die spezifische Dichte $\rho_1$ des ersten Fluids 128.

Figur 3 zeigt Schnitte durch vier verschiedene Kanalstrukturen, welche mit dem vorliegenden Verfahren hergestellt wurden. Wie sich deutlich aus Figur 3 ergibt, zeigen die Aufnahmen der Kanalstrukturen kreisförmige Kanalquerschnitte A. Wie bereits erwähnt, stellt die Möglichkeit der einfachen Herstellung von kreisförmigen oder ovalen Kanalquerschnitten einen besonderen Vorteil gegenüber aus dem Stand der Technik bekannten Strukturierungsverfahren dar, welche in der Regel rechteckige Kanalquerschnitte erzeugen. Der Durchmesser der Kanäle und somit der jeweilige Kanalquerschnitt A kann hierbei vorzugsweise über die Förderrate des zweiten Fluids 132 eingestellt werden. Die Länge des in Figur 3 dargestellten Maßstabsbalkens beträgt 500 $\mu$m.

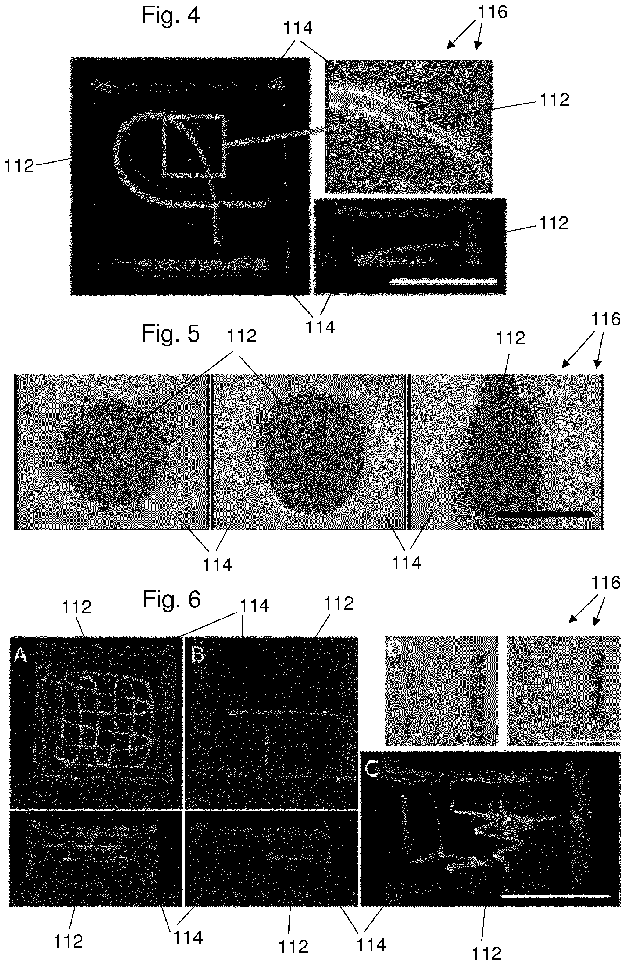

Figur 4 zeigt exemplarisch, welche Bedeutung die Förderrate Q des zweiten Fluids 132 für die Ausgestaltung der dreidimensionalen Struktur 112 aufweist. Figur 4 zeigt hierzu eine Aufnahme einer weiteren Spiralstruktur, bei welche die Förderrate Q des zweiten Fluids 132 während der Herstellung der Spiralstruktur verändert wurde. Auf diese Weise konnte in dem in Figur dargestellten Ausführungsbeispiel eine Verringerung des Kanaldurchmessers von 550 $\mu$m auf 370 $\mu$m erreicht werden. Folglich kann durch Variation der Förderrate Q des zweiten Fluids 132 grundsätzlich der Kanalquerschnitt A während des Herstellungsverfahrens eingestellt werden. Diese Eigenschaft des vorliegenden Verfahrens ermöglicht somit insbesondere eine Herstellung von kontinuierlicher Übergängen, ohne dass hierbei, wie aus dem Stand der Technik bekannt, eine Diskretisierung des mikrofluidischen Bauteils 116 entlang der Baurichtung entsprechend den einzelnen Fertigungsschritten erfolgen würde. Die Länge des in Figur 4 dargestellten Maßstabsbalkens beträgt 1.8 cm.

Figur 5 zeigt exemplarisch, dass sich neben kreisförmigen Kanalquerschnitten, wie z.B. in Figur 4 dargestellt, auch andere Arten von Kanalquerschnitten, insbesondere von ovalen Kanalquerschnitten mit kontinuierlichen Formen, herstellen lassen. Diese können vorzugsweise durch eine Kombination einer Veränderung einer Vorschubgeschwindigkeit des Aktors 144 und der Förderrate Q des zweiten Fluids 132 eingestellt werden. Figur 5 zeigt drei Ausführungsbeispiele für Kanalquerschnitte, die unter Verwendung verschiedene Förderrate Q für das dasselbe zweite Fluid 132 erzeugt wurden. Hierbei erfolgte bei einer Vorschubgeschwindigkeit des Aktors von 50 mm/min (Figur 5A), 250 mm/min (Figur 5B) bzw. 500 mm/min (Figur 5C) eine Änderung der Förderrate Q des zweiten Fluids 132 von 0,2 $\mu$L bis 1 $\mu$L pro mm Bewegung des Aktors in der x-Richtung bzw. der y-Richtung. Die Länge des in Figur 5 dargestellten Maßstabsbalkens beträgt 500 $\mu$m.

Figur 6 zeigt weitere Ausführungsbeispiele von dreidimensionalen Strukturen, welche sich mit dem vorliegenden Verfahren herstellen lassen. Insbesondere ermöglich das vorliegende Verfahren eine Herstellung von interpenetrierenden Strukturen, vorzugsweise von Kanalkreuzungen. Figur 6A zeigt Aufnahmen von oben bzw. in Seitenansicht von zwei verbundenen Kanalmäandern, welche in zwei übereinander liegenden Ebenen angeordnet sind. Figur 6B zeigt Aufnahmen von oben bzw. in Seitenansicht einer T-Kreuzung. Figur 6C zeigt eine Aufnahme einer Seitenansicht einer Helixstruktur. Figur 6D zeigt Aufnahmen von perspektivischen Ansichten der Strukturen aus den Figuren 6A und 6B. Zur Erstellung der Aufnahmen wurden die Kanäle wurden mit fluoreszierender Tinte gefüllt und bei einer optischen Wellenlänge von 365 nm belichtet. Die Länge des in Figur 6 dargestellten Maßstabsbalkens beträgt 1.8 cm.

Eingesetzte Substanzen:

*Beispiel 1: PDMS Wacker Elastosil 601 als polymerisierbares Fluid und Pluronic PE3100 als nicht-polymerisierbaren Fluids*

Als polymerisierbares Fluid (Strukturfluid) wurde PDMS Wacker Elastosil 601 verwendet, das zunächst in einem Masseverhältnis 9:1 (Komponente A zu Komponente B) laut Herstellerangaben vorgemischt und im Vakuum entgast wurde. Als nicht-polymerisierbares Fluid (Inertfluid) kam bei diesem Versuch Pluronic PE3100 zum Einsatz. Dabei handelt es sich um hydrophiles leicht fließendes Fluid mit einer Dichte von 1.02 g/cm$^3$; diese Dichte entspricht der Dichte des ausgehärteten Strukturfluids.

Der Aufbau, der verwendet wurde, ist in Figur 1 schematisch dargestellt. Die Polymerisation erfolgte bei Raumtemperatur (22 °C, Polymerisation nach 2 Stunden formstabil, nach spätestens 24 h vollständig abgeschlossen) und Umgebungsdruck. Das Inertfluid wurde anschließend durch mehrmaliges Spülen im Wasserbad entfernt. Die Trocknung des finalen Bauteils erfolgte in einem Trockenofen (50°C, 20 Minuten).

Insbesondere wurden hierbei die in den Figuren 2 A und 2B links sowie die in der Figur 2C oben dargestellten formstabilen Strukturen erhalten.

*Beispiel 2: Weitere getestete Systeme*

Das in Beispiel 1 beschriebene Verfahren wurde zudem für weiteren, in Tabelle 1 gezeigte Kombinationen aus Strukturfluid und Inertfluid durchgeführt. Die Polymerisationsbedingungen wurden, soweit nötig, an das entsprechende polymerisierbare Fluid, gemäße Herstellerangaben angepasst. Mit allen gezeigten Kombinationen konnten die gewünschten Strukturen erhalten werden, wobei sich die in Beispiel 1 und den Beispielen 2.1 bis 2.4 aufgeführten Kombinationen als besonders formstabil, mit ggf. etwas Absinken der Struktur (Beispiele 2.1. bis 2.4), und demnach als besonderes vorteilhaft erwiesen:

| Beispiel-Nr. | Matrix | Strukturfluid | Ergebnis |
|---|---|---|---|
| 2.1 | PDMS | Triton X-100 | Erfolgreich, Struktur ist formstabil, lediglich leichtes Absinken der Struktur |
| 2.2 | PDMS | Tween® 20 | Erfolgreich, Struktur ist formstabil, lediglich etwas stärkeres Absinken der Struktur |
| 2.3 | Komposit: PDMS/Siliciumoxid Nanopartikel (30 vol%) | Triton X-100 | Erfolgreich, Struktur ist formstabil, lediglich leichtes Absinken der Struktur |
| 2.4 | Komposit: PDMS/ Hexamethyldisilazanfunktionalisierte Siliziumoxid Nanopartikel (30 vol%) | Triton X-100 | Erfolgreich, Struktur ist formstabil, lediglich leichtes Absinken der Struktur |
| 2.5 | PDMS | DMSO | Erfolgreich, Struktur ist weniger formstabil, verzieht sich etwas |
| 2.6 | PDMS | Tween® 20/DMSO Gemische (50:50, Vol.%) | Erfolgreich, Struktur ist weniger formstabil, verzieht sich etwas |
| 2.7 | PDMS | DMSO + PdCl$_2$ (99.5 Gew.%, 0.5 Gew.%) | Erfolgreich, Struktur ist weniger formstabil, verzieht sich etwas |
| 2.8 | PDMS | Tween® 20/Speier Katalysator (99.5 Gew.%, 0.5 Gew.%) | Erfolgreich, Struktur ist weniger formstabil, verzieht sich etwas |
| 2.9 | PDMS | Speier Katalysator (Platinkatalysator in Polydimethlysiloxan) | Erfolgreich, Struktur ist weniger formstabil, verzieht sich etwas |
| 2.10 | PDMS | Silikonöl + Siliziumdioxid Nanopartikel (40 Vol.%) | Erfolgreich, Struktur ist weniger formstabil, stärkeres Verziehen der Struktur, mitunter so, dass die verbundenen Kanäle getrennt sind |

Bezugszeichenliste

110            Vorrichtung

| | |
|---|---|
| 112 | dreidimensionale Struktur |
| 114 | Matrix |
| 116 | mikrofluidisches Bauteil |
| 118 | Kanalnetzwerk |
| 120 | Hauptkanal |
| 122, 122' | Seitenkanal |
| 124, 124', 124" | Öffnung |
| 126 | Gefäß |
| 128 | erstes polymerisierbares Fluid |
| 130 | Vorratsgefäß |
| 132 | zweites, nicht-polymerisierbares Fluid |
| 134 | ausgewählter Ort |
| 136 | steuerbares Applikationssystem |
| 138 | Dosiereinrichtung |
| 140 | Applikationsnadel |
| 142 | Schlauchsystem |
| 144 | Aktuator |
| 146 | bewegliche Plattform |
| 148 | Einrichtung zur Veränderung einer Förderrate Q |
| 150 | Steuereinrichtung |
| 152 | Verbindung |
| 154 | dreidimensionale Struktur |

**Patentansprüche**

1. Verfahren zur Erzeugung einer dreidimensionalen Struktur (112) in einer polymeren Matrix (114), wobei die dreidimensionale Struktur (112) hohle Kanalstrukturen umfasst, umfassend die folgenden Schritte, welche in der angegebenen Reihenfolge ausgeführt werden:

   a) Bereitstellen eines ersten polymerisierbaren Fluids (128) in einem Gefäß (126);
   b) Einbringen eines zweiten nicht-polymerisierbaren Fluids (132) mittels eines steuerbaren Applikationssystems (136) an mindestens einen ausgewählten Ort (134) innerhalb des ersten Fluids (128), wobei das erste Fluid (128) und das zweite Fluid (132) nicht miteinander mischbar sind, wodurch die dreidimensionale Struktur (112) angelegt wird;
   c) Polymerisieren des ersten Fluids (128), wodurch die polymere Matrix (114) erhalten wird, in welche die dreidimensionale Struktur (112) eingebracht ist, und
   d) Zumindest teilweises Entfernen des zweiten Fluids (132) aus der erzeugten dreidimensionalen Struktur (112).

   wobei das erste Fluid (128) eine erste spezifische Dichte und das zweite Fluid (132) eine zweite spezifische Dichte aufweist, wobei sich die erste spezifische Dichte und die zweite spezifische Dichte höchstens um 20 % voneinander unterscheiden.

2. Verfahren nach dem vorangehenden Anspruch, wobei sich die erste spezifische Dichte und die zweite spezifische Dichte höchstens um 12 % voneinander unterscheiden.

3. Verfahren nach einem der vorangehenden Ansprüche, wobei das zweite Fluid (132) mindestens zwei voneinander verschiedene Komponenten aufweist.

4. Verfahren nach einem der vorangehenden Ansprüche, wobei die Matrix (114) ein Polymer ausgewählt aus der Gruppe bestehend aus Epoxidharzen, Polysiloxanen, Polymethacrylaten, thiolhaltigen Polymeren und Polymeren hergestellt aus Thiolenen, umfasst.

5. Verfahren nach einem der vorangehenden Ansprüche, wobei das erste Fluid (128) mindestens eine polymerisierbare Verbindung, ausgewählt aus Silanen, Diolen, Isocyanaten, Polyisocyanaten, Acrylaten, Methycrylaten, Epoxiden, Thiolen, und Thiolenen, umfasst.

6. Verfahren nach einem der vorangehenden Ansprüche, wobei das erste polymerisierbare Fluid (128) weiterhin mindestens eine nicht polymerisierbare Komponente enthält, bevorzugt in einer Menge im Bereich von 1 bis 40 Vol.%, bezogen auf das Gesamtvolumen des ersten polymerisierbaren Fluids (128).

7. Verfahren nach einem der vorangehenden Ansprüche, wobei das zweite Fluid (132) ein Fluid ausgewählt aus der Gruppe bestehend aus DMSO, t-Octylphenoxypolyethoxyethanol, Polysorbate 10, Polysorbat 40, Polysorbat 80 und Gemischen aus zwei oder mehreren davon, umfasst.

8. Verfahren nach einem der vorangehenden Ansprüche, wobei das steuerbare Applikationssystem (136) eine Dosiereinrichtung (138) für das zweite Fluid (132) und einen Aktuator (144) zur Veränderung einer Position der Dosiereinrichtung (138) aufweist, wobei das zweite Fluid (132) mittels der Dosiereinrichtung (138) an den mindestens einen ausgewählten Ort (134) innerhalb des ersten Fluids (128) eingebracht wird, indem mittels einer Steuereinrichtung (150) zur Ansteuerung des steuerbaren Applikationssystems (136) jeweils die Position der Dosiereinrichtung (138) festgelegt wird.

9. Verfahren nach dem vorangehenden Anspruch, wobei ferner eine Einrichtung (148) zur Veränderung einer Förderrate des zweiten Fluids (132) vorgesehen ist, wobei mittels der Steuereinrichtung (150) jeweils eine Einstellung der Förderrate des zweiten Fluids (132) erfolgt, wobei durch die Einstellung der Förderrate des zweiten Fluids (132) eine Form der dreidimensionalen Struktur (112) in der Matrix (114) beeinflussbar ist.

10. Verfahren nach einem der vorangehenden Ansprüche, wobei das zweite Fluid (132) derart an den mindestens einen ausgewählten Ort (134) innerhalb des ersten Fluids (128) eingebracht wird, dass die dreidimensionale Struktur (112) in der Matrix (114) zumindest teilweise eine geschlossene Form annimmt.

11. Verfahren nach einem der vorangehenden Ansprüche, wobei das Polymerisieren des ersten Fluids (128) durch eine Polymerisationsreaktion, ausgelöst durch Wärme, Bestrahlung und/oder Selbstpolymerisation, erfolgt.

**Claims**

1. A method for generating a three-dimensional structure (112) in a polymeric matrix (114), wherein the three-dimensional structure (112) comprises hollow channel structures, the method comprising the following steps performed in the sequence as indicated:

   a) providing a first polymerizable fluid (128) in a receptacle (126);
   b) introducing a second non-polymerizable fluid (132) by using a controllable application system (136) at at least one selected site (134) within the first fluid (128), wherein the first fluid (128) and the second fluid (132) are not miscible with one another, whereby the three-dimensional structure (112) is set up;
   c) polymerizing the first fluid (128), whereby the polymeric matrix (114) is obtained in which the three-dimensional structure (112) has been introduced, and
   d) at least partially removing the second fluid (132) from the three-dimensional structure (112) generated,

   wherein the first fluid (128) has a first specific density and the second fluid (132) has a second specific density, wherein the first specific density and the second specific density differ from one another at most by 20%.

2. The method according to the preceding claim, wherein the first specific density and the second specific density differ from one another at most by 12%.

3. The method according to either of the preceding claims, wherein the second fluid (132) has at least two components different from one another.

4. The method according to any of the preceding claims, wherein the matrix (114) comprises a polymer selected from the group consisting of epoxy resins, polysiloxanes, polymethacrylates, thiol-containing polymers and polymers prepared from thiolens.

5. The method according to any of the preceding claims, wherein the first fluid (128) comprises at least one polymerizable compound selected from silanes, diols, isocyanates, polyisocyanates, acrylates, methacrylates, epoxides, thiols and thiolens.

6. The method according to any of the preceding claims, wherein the first polymerizable fluid (128) further contains at least one non-polymerizable component, preferably in an amount in the range from 1 to 40 vol%, based on the total volume of the first polymerizable fluid (128).

7. The method according to any of the preceding claims, wherein the second fluid (132) comprises a fluid selected from the group consisting of DMSO, *t*-octylphenoxypolyethoxyethanol, polysorbate 10, polysorbate 40, polysorbate 80 and mixtures of two or more thereof.

8. The method according to any of the preceding claims, wherein the controllable application system (136) has a metering device (138) for the second fluid (132) and an actuator (144) for altering a position of the metering device (138), wherein the second fluid (132) is introduced by using the metering device (138) at the at least one selected site (134) within the first fluid (128) by the stipulation of the position of the metering device (138) in each case by using a control device (150) for driving the controllable application system (136).

9. The method according to the preceding claim, wherein additionally a device (148) for altering a conveying rate of the second fluid (132) is provided, wherein the conveying rate of the second fluid (132) is adjusted in each case by using the control device (150), wherein a shape of the three-dimensional structure (112) in the matrix (114) is amenable to influence by the adjustment of the conveying rate of the second fluid (132).

10. The method according to any of the preceding claims, wherein the second fluid (132) is introduced at the at least one selected site (134) within the first fluid (128) in such a way that the three-dimensional structure (112) in the matrix (114) adopts at least partially a closed shape.

11. The method according to any of the preceding claims, wherein the polymerization of the first fluid (128) takes place by a polymerization reaction, initiated by heat, irradiation and/or self-polymerization.


**Revendications**

1. Procédé de génération d'une structure tridimensionnelle (112) dans une matrice polymère (114), la structure tridimensionnelle (112) comprenant des structures de canaux creux, ledit procédé comprenant les étapes suivantes, exécutées dans l'ordre indiqué :

   a) fournir un premier fluide polymérisable (128) dans un récipient (126) ;
   b) introduire un deuxième fluide non-polymérisable (132) au moyen d'un système d'application commandable (136) au niveau d'au moins un emplacement sélectionné (134) à l'intérieur du premier fluide (128), le premier fluide (128) et le deuxième fluide (132) n'étant pas miscibles l'un à l'autre, ce qui crée la structure tridimensionnelle (112) ;
   c) polymériser le premier fluide (128), ce qui donne la matrice polymère (114) dans laquelle la structure tridimensionnelle (112) est introduite, et
   d) retirer au moins partiellement le deuxième fluide (132) de la structure tridimensionnelle (112) générée,

   le premier fluide (128) ayant une première densité spécifique et le deuxième fluide (132) ayant une deuxième densité spécifique, la première densité spécifique et la deuxième densité spécifique différant l'une de l'autre de 20 % maximum.

2. Procédé selon la revendication précédente, la première densité spécifique et la deuxième densité spécifique différant l'une de l'autre de 12 % maximum.

3. Procédé selon l'une des revendications précédentes, le deuxième fluide (132) comportant au moins deux composants différents.

4. Procédé selon l'une des revendications précédentes, la matrice (114) comprenant un polymère choisi dans le groupe comprenant des résines époxy, des polysiloxanes, des polyméthacrylates, des polymères contenant des thiols et des polymères fabriqués à partir de thiolènes.

5. Procédé selon l'une des revendications précédentes, le premier fluide (128) comprenant au moins un composé polymérisable choisi parmi les silanes, les diols, les isocyanates, les polyisocyanates, les acrylates, les méthacrylates, les époxydes, les thiols et les thiolènes.

6. Procédé selon l'une des revendications précédentes, le premier fluide polymérisable (128) comprenant en outre au moins un composant non-polymérisable, de préférence dans une quantité allant de 1 à 40 % en volume sur la base du volume total du premier fluide polymérisable (128) .

7. Procédé selon l'une des revendications précédentes, le deuxième fluide (132) comprenant un fluide choisi dans le groupe comprenant le DMSO, le *t*-octylphénoxypolyéthoxyéthanol, le polysorbate 10, le polysorbate 40, le polysorbate 80 et des mélanges de deux ou plusieurs de ceux-ci.

8. Procédé selon l'une des revendications précédentes, le système d'application commandable (136) comportant un dispositif de dosage (138) destiné au deuxième fluide (132) et un actionneur (144) destiné à modifier une position du dispositif de dosage (138), le deuxième fluide (132) étant introduit dans le premier fluide (128) au niveau d'au moins un emplacement sélectionné (134) au moyen du dispositif de dosage (138) en ce que la position du dispositif de dosage (138) est déterminée à chaque fois au moyen d'un dispositif de commande (150) destiné à commander le système d'application commandable (136).

9. Procédé selon la revendication précédente, un dispositif (148) étant également prévu pour modifier un débit de distribution du deuxième fluide (132), un réglage du débit du deuxième fluide (132) étant effectué à chaque fois au moyen du dispositif de commande (150), une forme de la structure tridimensionnelle (112) dans la matrice (114) pouvant être influencée par réglage du débit de distribution du deuxième fluide (132).

10. Procédé selon l'une des revendications précédentes, le deuxième fluide (132) étant introduit au niveau d'au moins un emplacement sélectionné (134) à l'intérieur du premier fluide (128) de sorte que la structure tridimensionnelle (112) dans la matrice (114) adopte au moins partiellement une forme fermée.

11. Procédé selon l'une des revendications précédentes, la polymérisation du premier fluide (128) étant effectuée par une réaction de polymérisation déclenchée par la chaleur, le rayonnement et/ou l'auto-polymérisation.

Fig. 1a

Fig. 1b

## Fig. 2

## Fig. 3

## Fig. 4

## Fig. 5

## Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015017421 A2
- US 20090101278 A1
- US 20110250688 A1
- US 7399796 B2
- WO 2015066705 A1
- US 20120058174 A1
- US 20140106454 A1
- WO 2016090286 A1
- WO 2016040095 A1
- EP 0836453 B1
- US 20150174826 A1
- US 2016279868 A1
- DE 19606210 A1

**In der Beschreibung aufgeführte Nicht-Patentliteratur**

- **T. BHATTACHARJEE ; S.M. ZEHNDER ; K.G. ROWE ; S. JAIN ; R.M. NIXON ; W.G. SAWYER ; T.E. ANGELINI.** Writing in the granular gel medium. *Sci. Adv.,* 2015, vol. 1, e1500655
- **S. KHALIL ; J. NAM ; W. SUN.** Multi-nozzle deposition for construction of 3D biopolymer tissue scaffolds. *Emerald Rapid Prototyping Journal,* 2005, vol. 11, 9-17
- **WILLIE WU et al.** Omnidirectional Printing of 3D Microvascular Networks. *ADVANCED MATERIALS,* 24. Juni 2011, vol. 23 (24), ISSN 0935-9648, H178-H183